# EUROPÄISCHE PATENTSCHRIFT

(11) **EP 2 679 979 B1**
(45) Veröffentlichungstag und Bekanntmachung des Hinweises auf die Patenterteilung: **06.11.2019**
(21) Anmeldenummer: 12173369.5
(22) Anmeldetag: 25.06.2012
(51) Int. Cl.: G01N 3/46

(54) **Kratztester für Glasscheiben**
Scratch tester for glass panes
Testeur de rayures pour vitres

(43) Veröffentlichungstag der Anmeldung: 01.01.2014
(73) Patentinhaber: Saint-Gobain Glass France, 92400 Courbevoie (FR)
(72) Erfinder: Kremers, Stephan, 52525 Heinsberg (DE); Patzke, Edwin, 52222 Stolberg (DE); Schmelter, Guido, 52134 Herzogenrath (DE); Clintjens, Paul, 52134 Herzogenrath (DE)
(74) Vertreter: Lendvai, Tomas

(56) Entgegenhaltungen:
- DE-A1-102010 034 118
- DE-C- 445 901
- FR-A1- 2 895 800
- JP-A- 2001 091 444
- JP-A- 2008 292 293
- KR-A- 20040 047 470
- US-A1- 2010 206 041

## Beschreibung

Die Erfindung betrifft einen Kratztester für Glasscheiben, ein Verfahren zum Kratztesten von Glasscheiben und die Verwendung eines Kratztesters.

Glas ist als in der Regel hochtransparenter und gleichzeitig harter Werkstoff sehr gefragt. Trotz seiner hohen Oberflächenhärte ist Glas ein oft spröder und häufig leicht zerbrechlicher Werkstoff. Die Beständigkeit, Festigkeit und Stabilität von Glasscheiben ist dabei in vielen Anwendungsbereichen von großer Bedeutung. Wichtige Bereiche sind Bauverglasungen, Fahrzeugverglasungen, Automobilverglasungen und Photovoltaikgläser. Die Beurteilung der physikalischen Parameter ist beim Werkstoff Glas auch aufgrund seiner amorphen Grundstruktur recht schwierig. Gleichzeitig sind Glasscheiben bei Fahrzeugen, insbesondere bei hohen Geschwindigkeiten und Fliehkräften, großen Belastungen ausgesetzt. Zur Einschätzung dieser Belastbarkeit sind daher einfache und gut reproduzierbare Testverfahren von großer Bedeutung. Insbesondere die ständig steigenden Kosten beim Glasbruch, beispielsweise durch Steinschlag, machen ein reproduzierbares Testverfahren der Glasscheiben notwendig. Der Scheibentest sollte sich dabei auf die Festigkeit der gesamten Windschutzscheibe beziehen. Es geht darum, ob ein (vermeintlich) kleiner und teils kaum sichtbarer Kratzer zu einem Windschutzscheiben-Bruch führen kann.

Die Kratzfestigkeit eines Glases kann über verschiedene Methoden und Verfahren bestimmt werden. Hierzu können verschiedene Verfahren zur Bestimmung der Werkstoffhärte verwendet werden, beispielsweise die Härtebestimmung nach Mohs, Martens, Brinell und Vickers. Die genannten Verfahren bestimmen dabei in der Regel die auf die Glasoberfläche wirkenden Kräfte und/oder Eindringtiefen. Aufgrund der hohen Oberflächenhärte des Glases eigenen sich nur sehr harte Werkstoffe zum Kratzen von Glas. Geeignete Werkstoffe sind beispielsweise Siliziumcarbid und Diamant.

Die Beurteilung der Messergebnisse ist beim Werkstoff Glas häufig mit größeren Schwierigkeiten verbunden. So können sich sichtbare oberflächliche Kratzer als Mikrorisse oder Haarrisse weit innerhalb des Glaskörpers ausbreiten. Diese kaum sichtbaren Beschädigungen des Glaskörpers können die Stabilität und Festigkeit des Glases ganz wesentlich beeinflussen. Variiert der Krafteintrag während einer Messung nur geringfügig, so kann sich die Ausdehnung der gebildeten Kratzer, besonders der Mikrorisse im Glaskörper deutlich unterscheiden. Die daraus resultierenden Messergebnisse und die Stabilität der Scheibe fallen so deutlich verschieden aus. Um reproduzierbare Messergebnisse zu erhalten, ist daher ein genau definierter Krafteintrag auf der Glasoberfläche notwendig.

US2002014778 A1 offenbart ein Verfahren zum Schutz von Windschutzscheiben eines Kraftfahrzeuges vor Steinschlag. Die Schutzwirkung wird durch eine resistente Barriere im Randbereich der Scheibe erzeugt.

US 3,985,026 A offenbart eine Vorrichtung zum Testen von Oberflächenbeschichtungen auf Glasgegenständen.

GB 2,449,174 A offenbart eine Automobilverglasung mit aufgedruckten Schaltkreisen. Des Weiteren wird ein Verfahren zum Entfernen des Aufdrucks offenbart. Das Verfahren umfasst einen Kratztest mit einem Rockwell Diamanten und einer Kraft größer als 10 N.

DE 10 2010 031 866 A1 offenbart eine silikonbeschichtete Glasoberfläche. Ein Kratztest dient zur Bestimmung der Oberflächeneigenschaften. Der Kratztest umfasst eine Wolframcarbidspitze mit einem Auflagegewicht von größer 500 g.

JP 2001 091444 A offenbart eine Kratzprüfmaschine, die zur Bewertung eines auf der Oberfläche einer Grundplatte gebildeten Films verwendet wird.

Die Aufgabe der Erfindung liegt darin, eine Vorrichtung bereitzustellen, welche eine Anritzung der Glasoberfläche und des oberflächennahen Glaskörpers mit einem konstanten und reproduzierbaren Krafteintrag, sowie eine sich über viele Tests unveränderte Geometrie der Kratzspitze gewährleistet.

Die Aufgabe der vorliegenden Erfindung wird erfindungsgemäß durch den unabhängigen Anspruch 1 gelöst. Bevorzugte Ausführungen gehen aus den Unteransprüchen hervor.

Ein erfindungsgemäßes Verfahren zum definierten Kratzen einer Glasoberfläche und die Verwendung des erfindungsgemäßen Kratztesters gehen aus den weiteren unabhängigen Ansprüchen 12 beziehungsweise 14 hervor.

Der erfindungsgemäße Kratztester umfasst einen Kratzzylinder. Der Kratzzylinder ist als Hohlzylinder ausgebildet und umfasst eine innerhalb des Kratzzylinders beweglich gelagerte Feder. Die Feder ist innerhalb des Kratzzylinders mit einem Halteblock und einem am Halteblock befestigten Diamanten verbunden. Der Halteblock kann in Form mehrerer verbundener Bauteile ausgeführt sein. Der Halteblock fixiert den zum Ankratzen der Glasoberfläche befestigten Diamanten. Der Halteblock ist innerhalb des Kratzzylinders vertikal beweglich gelagert.

Der Kratzzylinder umfasst entlang der Außenfläche weiterhin eine Aussparung oder Öffnung in Form eines Justierfensters. Die Feder ist innerhalb des Kratzzylinders im Bereich des Justierfensters mit einer Justiervorrichtung lose oder fest verbunden. Der Ausdruck "verbunden" umfasst im Sinne der Erfindung sowohl eine feste Verbindung mit der Feder als auch eine lose Verbindung, in der die Justiervorrichtung oder der Halteblock die Feder zusammendrückt. Die Justiervorrichtung ist bevorzugt als verschraubbarer Metallring ausgebildet.

Der erfindungsgemäße Kratztester für Glasscheiben umfasst des Weiteren mindestens einen Schiebeblock mit einer Durchbohrung und zwei unterhalb des Schiebeblocks befindliche Gleitschienen. Der Schiebblock umfasst Metall-, Komposit- oder Kunststoffblöcke, bevorzugt aus Eisen, besonders bevorzugt aus Edelstahl. Der Schiebeblock erlaubt eine sichere Führung des erfindungsgemäßen Kratztesters und verhindert das Verrutschen. Der Kratzzylinder ist innerhalb der Durchbohrung des Schiebeblocks, beispielsweise mit einer Schraube oder Niete, fixiert. Der Kratzzylinder ist bevorzugt senkrecht zu den Gleitschienen in der Durchbohrung angeordnet. Der Kratzzylinder kann alternativ in einem Winkel von 70° bis 110° zu den Gleitschienen innerhalb der Durchbohrung angeordnet und fixiert sein.

Der Kratzzylinder ist bevorzugt innerhalb der Durchbohrung über eine Feststellschraube fixiert. Die Feststellschraube ermöglicht einen schnellen und einfachen Austausch des Kratzzylinders, so dass der Kratztester mit verschiedenen Kratzzylindern verwendet werden kann. Der einfache und schnelle Wechsel des Kratzzylinders erlaubt zudem die schnelle Untersuchung verschiedener Glasscheibentypen hintereinander weg.

Der Halteblock ist bevorzugt innerhalb eines Führungsrings beweglich gelagert. Der Führungsring ermöglicht den Einsatz von Halteblöcken, deren Durchmesser kleiner als der Durchmesser des Kratzzylinders ist.

Der Führungsring ist bevorzugt über die Feststellschraube fixiert.

Der Diamant umfasst bevorzugt Vickersdiamanten oder Diamanten mit einer Kegelform mit spitzen Winkel. Der Diamant weist bevorzugt im Bereich seiner Spitze die Form einer gleichseitigen Pyramide auf. Diese regelmäßige Geometrie erlaubt ein reproduzierbares Ankratzen der Glassoberfläche. Bei Abweichungen von der gleichseitigen Pyramidenform kann der Diamant mehrfach nachgeschliffen und somit häufig und kostengünstig wiederverwertet werden. Es eignen sich sowohl natürliche oder auch künstliche Industriediamanten.

Der Schiebeblock weist bevorzugt einen Abstandshalter in Richtung der Gleitschienen auf. Der Abstandshalter ist bevorzugt so ausgebildet, dass wenn der Schiebeblock auf der Glasoberfläche anliegt, er über die Gleitschienen hinausragt. Der Abstandshalter erzeugt einen definierten Weg oder eine Strecke, über den der Kratztester ausgehend vom Kantenbereich über die Glasoberfläche geschoben werden kann. Eine weitere Messvorrichtung, beispielsweise ein Zentimetermass, ist nicht notwendig. Der Abstandshalter ist im Schnitt bevorzugt im Bereich eines Endblocks T-förmig ausgebildet. Der Endblock ist bevorzugt scheibenförmig ausgebildet, die Dicke des Endblocks beträgt bevorzugt 2 mm bis 40 mm. Der gesamte Abstandshalter weist bevorzugt eine Länge von 20 mm bis 150 mm auf.

Der Abstand des Diamanten innerhalb des Kratzzylinders zur Glaskante wird über die Positionierung der Durchbohrung innerhalb des Schiebeblocks definiert. Ein Aufliegen des Diamanten auf der direkten Glaskante sollte vermieden werden, da die Glasspannungen im direkten Kantenbereich recht deutlich von der restlichen Scheibenfläche abweichen. Eine direkt an der Scheibenkante beginnende Messung würde daher das Messergebnis in seiner Gesamtheit verfälschen.

Die Feder enthält bevorzugt ein Metall, besonders bevorzugt Aluminium, Titan, Eisen, Chrom, Vanadium, Kobalt, Nickel, Wolfram und/oder Legierungen davon, insbesondere bevorzugt Klavierdraht.

Schiebeblock und/oder der Kratzzylinder enthalten bevorzugt ein Metall, besonders bevorzugt Aluminium, Titan, Eisen, Chrom, Vanadium, Kobalt, Nickel, Wolfram und/oder Legierungen davon.

Der Schiebeblock und der Kratzzylinder enthalten in einer alternativen Ausgestaltung bevorzugt ein Polymer, bevorzugt Polyethylen, Polypropylen, Polystyrol, Polyurethane, Polymethylmetacrylate, Polyacrylate, Polyester, Polyamide, Polyethylenterephthalat und/oder Gemische oder Copolymere davon, besonders bevorzugt Polycarbontblends wie Polycarbobnat/Polyethylenterephthalat; Polycarbonat/Acrylnitril-Butadien-Styrol; Polycarbonat/Polybutylenterephthalat.

Der Halteblock weist eine Einkerbung sowie der Kratzzylinder eine Arretierschraube auf. Die Einkerbung schließt die Spitze der Arretierschraube bevorzugt innerhalb des Kratzzylinders ein. Der Halteblock kann sich in diesem Fall nur in der Streck- und Dehnungsrichtung der Feder und entlang der Einkerbung bewegen. Eine Bewegung des Halteblocks entlang seiner Drehachse ist nur geringfügig möglich. Eine Verkantung des Halteblocks und damit des Diamanten auf der Glasoberfläche wird somit vermieden.

Die Feder übt bevorzugt eine Kraft von 1 N bis 20 N aus und weist bevorzugt eine Federkonstante mit einem Wert von 2 N/m bis 100 N/m, bevorzugt 5 N/m bis 50 N/m auf. Die Federkraft richtet sich im Wesentlichen nach den geforderten Testbedingungen und der zu untersuchenden Glasoberfläche. Der Bereich von 1 N bis 20 N erlaubt ein reproduzierbares Ankratzen der Glasoberfläche. In Abhängigkeit von der Härte der Glasoberfläche können auch größere Kräfte notwendig sein.

Der Diamant ist bevorzugt bei entspannter und gespannter Feder zwischen oder unterhalb der Gleitschienen positioniert. Bei gespannter Feder wird der Diamant weiter unterhalb der Gleitschienen positioniert, sodass der Diamant beim Aufsetzen des Kratztesters direkt auf der Glasoberfläche positioniert ist.

Die Erfindung umfasst des Weiteren ein Verfahren zum definierten Kratzen einer Glasoberfläche mit einem wie oben beschriebenen erfindungsgemäßen Kratztester. In einem ersten Schritt wird die Feder über die Justagevorrichtung innerhalb des Justierfernsters fixiert. In Abhängigkeit von der Justierung wird von der Feder eine definierte Kraft auf den Halteblock und damit auf den Diamanten übertragen. In einem folgenden Schritt wird über die Hand einer Testperson eine der über die Justagevorrichtung in der Feder eingestellten Federkraft äquivalente Kraft ausgeübt, indem die Gleitschienen zur Auflage auf eine Glasfläche gebracht werden. In einem abschließenden Schritt wird der Schiebeblock über eine bevorzugt definierte Strecke über die Glasfläche bewegt.

Der Schiebeblock wird bevorzugt bis zum Anschlag eines auf dem Schiebeblock befestigten Abstandshalters über die Glasfläche bewegt. Dazu wird der Schiebeblock auf den Rand der Glasscheibe mit den Gleitschienen zur Auflage gebracht. Im anschließenden Schritt wird der Schiebeblock in zum Abstandshalter entgegengesetzter Richtung bewegt, bis der Abstandshalter am Rand der Glasscheibe zur Auflage kommt. Der Abstandshalter erzeugt einen definierten Weg oder eine Strecke, über den der Kratztester ausgehend vom Kantenbereich über die Glasoberfläche geschoben werden kann.

Die Erfindung umfasst des Weiteren die Verwendung des erfindungsgemäßen Kratztesters zum definierten Kratzen von Glasscheiben, bevorzugt Fahrzeugscheiben, besonders bevorzugt Windschutzscheiben, Seitenscheiben oder Heckscheiben. Der erfindungsgemäße Kratztester erlaubt eine Testung der Glasscheiben direkt am Produktionsstandort. Aufwendige, fest installierte Testapparaturen sind nicht notwendig.

Im Folgenden wird die Erfindung anhand von einer Zeichnung näher erläutert. Die Zeichnung ist eine rein schematische Darstellung und nicht maßstabsgetreu. Sie schränkt die Erfindung in keiner Weise ein.

Es zeigen:
Figur 1 einen Querschnitt des erfindungsgemäßen Kratztesters,
Figur 2 eine schematische Draufsicht des erfindungsgemäßen Kratztesters,
Figur 3 eine schematische Draufsicht einer bevorzugten Ausführungsform des Kratztesters und
Figur 4 ein Fließschema des erfindungsgemäßen Verfahrens zum definierten Kratzen einer Glasoberfläche.

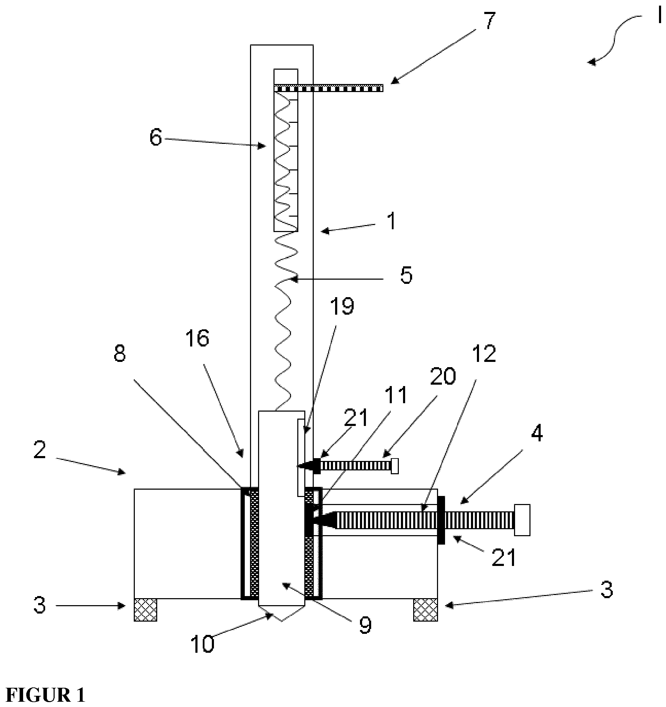

Figur 1 zeigt einen Querschnitt des erfindungsgemäßen Kratztesters (I). Der Kratztester umfasst einen Schiebeblock (2) mit einer Durchbohrung (16). Zwei Gleitschienen (3) sind unterhalb des Schiebeblocks (2) angeordnet. Der Schiebblock (2) umfasst bevorzugt Metallblöcke, besonders bevorzugt aus Eisen, insbesondere bevorzugt aus Edelstahl. Der erfindungsgemäße Kratztester (I) umfasst des Weiteren einen Kratzzylinder (1). Der Kratzzylinder (1) ist als Hohlzylinder ausgebildet und umfasst eine innerhalb des Kratzzylinders (1) beweglich gelagerte Feder (5). Die Feder (5) ist innerhalb des Kratzzylinders (1) mit einem Halteblock (9) und einem am Halteblock (9) befestigten Diamanten (10) verbunden. Der Kratzzylinder (1) umfasst außerdem eine Aussparung in Form eines Justierfensters (6). Die Feder (5) ist innerhalb des Kratzzylinders (1) im Bereich des Justierfensters (6) mit einer Justiervorrichtung (7) lose oder fest verbunden. Die Justiervorrichtung (7) ist bevorzugt als verschraubbarer Metallring ausgebildet. Der Kratzzylinder (1) ist innerhalb der Durchbohrung (16) mit einer Feststellschraube (4) innerhalb einer Schraubenaussparung (12) im Schiebeblock (2) befestigt. Die Feststellschraube (4) kann bevorzugt an einer Schraubfläche (11) eines Einlegezylinders (8) und/oder einer Mutter (21) fixiert werden. Der Halteblock (9) ist innerhalb des Kratzzylinders (1) beweglich gelagert. Der Halteblock (9) weist eine Einkerbung (19) auf. Eine Arretierschraube (20) mit Mutter (21) begrenzt innerhalb der Einkerbung (19) die Bewegungsrichtung des Halteblocks (9). Der Halteblock kann sich begrenzt durch die Einkerbung (19) nur entlang der Mittelachse des Kratzzylinders (1) bewegen. Gleichzeitig ist der Halteblock (9) entlang seiner eigenen Drehachse fixiert gelagert. Eine Verkantung des Halteblocks (9) und damit des Diamanten (10) auf der Glasoberfläche wird somit vermieden.

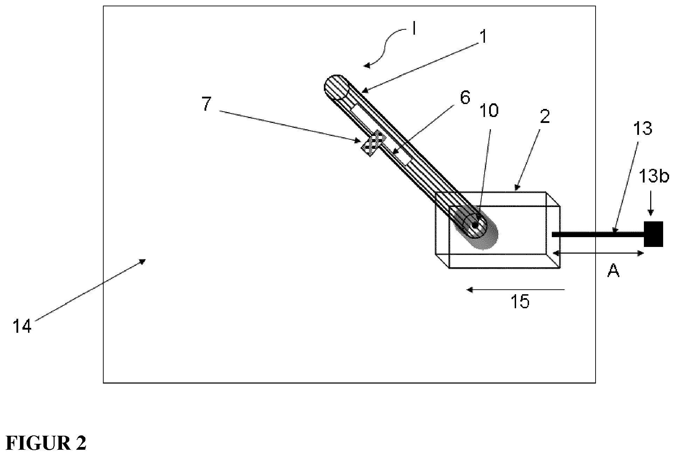

Figur 2 zeigt eine schematische Draufsicht des erfindungsgemäßen Kratztesters (I) auf einer zu testenden Glasscheibe (14). Der Schiebeblock (2) wird auf den nicht gezeigten Führungsschienen (3) entlang der durch den Abstandshalter (13) definierten Strecke (A) auf der Glasscheibe (14) in Prüfrichtung (15) bewegt. Innerhalb des Schiebeblocks (2) befindet sich der angedeutete Kratzzylinder (1). Die Einstellung der Federkraft der nicht gezeigten Feder (5) erfolgt innerhalb des Justierfensters (6) über die Justagevorrichtung (7). Durch Aufdrücken des Schiebeblocks (2) auf der Oberfläche der Glasscheibe (14) wird die über die Justagevorrichtung in der Feder (5) vorgegebene Kraft mittels des Diamanten (10) auf die Glasscheibe (14) übertragen. Über den am nicht gezeigten Montageblock (9) befestigten Diamanten (10) erfolgt das Einritzen der Oberfläche der Glasscheibe (14).

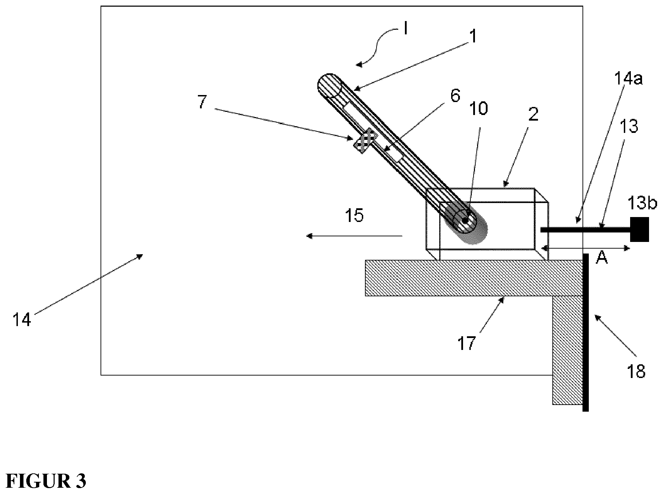

Figur 3 zeigt eine weitere schematische Draufsicht des erfindungsgemäßen Kratztesters (I) auf einer zu testenden Glasscheibe (14) mit angelegtem Winkel (17). Der Aufbau des erfindungsgemäßen Kratztesters (I) auf einer Glasscheibe (14) entspricht dem in Figur 2 beschriebenen. Der Winkel (17) wird mit einer Winkelleiste (18) am Rand der Glasscheibe (14) fixiert. Der Kratztester (I) wird anschließend von der Scheibenkante (14a) entlang des ebenfalls bevorzugt an derselben Scheibenkante (14a) befestigten Winkels (17) in Richtung der Scheibeninnenfläche in Prüfrichtung (15) bewegt. Die Länge (A) des Abstandshalters (13) ohne den Endblock (13b) begrenzt und definiert damit die zurücklegbare Wegstrecke des Kratztesters (I). Der Winkel (17) ist bevorzugt rechtwinklig ausgeführt, es sind jedoch auch Winkel zwischen 45° und 135° möglich.

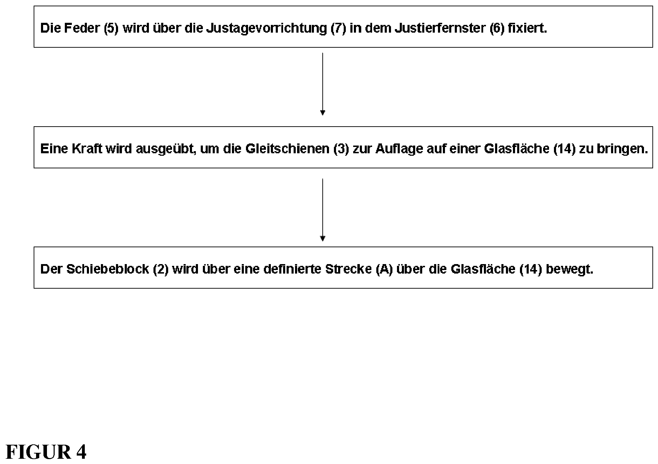

Figur 4 zeigt ein Fließschema des erfindungsgemäßen Verfahrens zum definierten Kratzen einer Glasoberfläche. In einem ersten Schritt wird die Feder (5) über die Justagevorrichtung (7) innerhalb des Justierfernsters (6) fixiert. In Abhängigkeit von der Justierung und der auf die Feder (5) übertragenen Spannung wird von der Feder (5) eine definierte Kraft auf den Halteblock (9) und damit auf den Diamanten (10) übertragen. In einem folgenden Schritt wird über die Hand einer Testperson eine der über die Justagevorrichtung (7) in der Feder (5) eingestellten Federkraft äquivalente Kraft ausgeübt, bis die Gleitschienen (3) zur Auflage auf einer Glasfläche gebracht werden. In einem abschließenden Schritt wird der Schiebeblock (2) des Kratztesters (I) über eine bevorzugt definierte Strecke (A) über die Oberfläche der Glasscheibe (14) bewegt. Die Auflage des Abstandshalters (13) mit dem Endblock (13b) markiert den Abschluss des Kratzvorgangs auf der Oberfläche der Glasscheibe (14).

### Bezugszeichenliste

- (A): Länge (des Abstandshalters) ohne Endblock (13b)
- (I): Kratztester
- (1): Kratzzylinder
- (2): Schiebeblock
- (3): Gleitschienen
- (4): Feststellschraube
- (5): Feder
- (6): Justierfenster
- (7): Justiervorrichtung
- (8): Einlegezylinder
- (9): Halteblock
- (10): Diamant
- (11): Schraubfläche
- (12): Schraubenaussparung
- (13): Abstandshalter
- (13b): Endblock
- (14): Glasscheibe
- (14a): Scheibenkante
- (15): Prüfrichtung
- (16): Durchbohrung
- (17): Winkel
- (18): Winkelleiste
- (19): Einkerbung
- (20): Arretierschraube
- (21): Mutter

## Patentansprüche

1. Kratztester für Glasscheiben mindestens umfassend
a. einen Kratzzylinder (1) umfassend eine innerhalb des Kratzzylinders (1) gelagerte Feder (5), wobei die Feder (5) mit einem Halteblock (9) und einem am Halteblock (9) befestigten Diamanten (10) verbunden ist sowie eine innerhalb eines Justierfensters (6) entlang der Außenfläche des Kratzzylinders (1) mit der Feder (5) lose oder fest verbundene Justiervorrichtung (7),
b. einen Schiebeblock (2) mit einer Durchbohrung (16) und zwei unterhalb des Schiebeblocks (2) befindliche Gleitschienen (3) zur Auflage auf eine Glasfläche (14),
c. wobei der Kratzzylinder (1) innerhalb der Durchbohrung (16) fixiert ist und wobei der Halteblock (9) eine Einkerbung (19) sowie der Kratzzylinder (1) eine Arretierschraube (20) aufweisen und die Einkerbung (19) die Arretierschraube (20) innerhalb des Kratzzylinders (1) umschließt.

2. Kratztester nach Anspruch 1, wobei der Kratzzylinder (1) innerhalb der Durchbohrung (16) über eine Feststellschraube (4) fixiert ist.

3. Kratztester nach Anspruch 1 oder 2, wobei der Halteblock (9) innerhalb eines Führungsrings (8) beweglich gelagert ist.

4. Kratztester nach Anspruch 3, wobei der Führungsring (8) über die Feststellschraube (4) fixiert ist.

5. Kratztester nach einem der Ansprüche 1 bis 4, wobei der Diamant (10) Vickersdiamanten umfasst.

6. Kratztester nach einem der Ansprüche 1 bis 5, wobei der Diamant (10) die Form einer gleichseitigen Pyramide aufweist.

7. Kratztester nach einem der Ansprüche 1 bis 6, wobei der Schiebeblock (2) einen Abstandshalter (13) mit einen Endblock (13b) in Richtung der Gleitschienen (3) aufweist.

8. Kratztester nach Anspruch 7, wobei der Endblock (13b) im Schnitt T-förmig ausgebildet ist.

9. Kratztester nach einem der Ansprüche 1 bis 8, wobei der Schiebeblock (2) ein Metall, bevorzugt Aluminium, Titan, Eisen, Chrom, Vanadium, Kobalt, Nickel, Wolfram und/oder Legierungen davon enthält.

10. Kratztester nach einem der Ansprüche 1 bis 9, wobei die Feder (5) eine Kraft von 1 N bis 20 N ausübt.

11. Kratztester nach einem der Ansprüche 1 bis 10, wobei der Diamant (10) bei entspannter Feder (5) zwischen oder unterhalb der Gleitschienen (3) positioniert ist.

12. Verfahren zum definierten Kratzen einer Glasoberfläche mit einem Kratztester nach einem der Ansprüche 1 bis 11, wobei
a. die Feder (5) über die Justagevorrichtung (7) in dem Justierfernster (6) fixiert wird,
b. eine Kraft von oben auf den Schiebeblock (2) ausgeübt wird, um die Gleitschienen (3) zur Auflage auf einer Glasfläche (14) zu bringen und
c. der Schiebeblock (2) über die Glasfläche (14) bewegt wird.

13. Verfahren nach Anspruch 12, wobei der Schiebeblock (2) bis zum Anschlag eines auf dem Schiebeblock (2) befestigten Abstandshalters (13) über die Glasfläche (14) bewegt wird.

14. Verwendung des Kratztesters nach einem der Ansprüche 1 bis 11 zum definierten Kratzen von Glasscheiben, bevorzugt Fahrzeugscheiben, besonders bevorzugt Windschutzscheiben.

## Claims

1. Scratch tester for glass panes at least comprising
a. a scratching cylinder (1) comprising a spring (5) mounted within the scratching cylinder (1), wherein the spring (5) is connected to a holding block (9) and a diamond (10) attached to the holding block (9), and an adjustment device (7) detachably or fixedly connected to the spring (5) within an adjustment window (6) along the outer surface of the scratching cylinder (1),
b. a sliding block (2) with a bore (16) and two slide rails (3) situated below the sliding block (2),
c. wherein the scratching cylinder (1) is fixed within the bore (16) and wherein the holding block (9) has a notch (19) and the scratch cylinder (1) has a locking screw (20) and the notch (19) encloses the locking screw (20) within the scratch cylinder (1).

2. Scratch tester according to claim 1, wherein the scratch cylinder (1) is fixed inside the bore (16) via a fixing screw (4).

3. Scratch tester according to claim 1 or 2, wherein the holding block (9) is movably mounted within a guide ring (8).

4. Scratch tester according to claim 3, wherein the guide ring (8) is fixed via the fixing screw (4).

5. Scratch tester according to one of claims 1 to 4, wherein the diamond (10) includes Vickers diamonds.

6. Scratch tester according to one of claims 1 to 5, wherein the diamond (10) has the shape of an equilateral pyramid.

7. Scratch tester according to one of claims 1 to 6, wherein the sliding block (2) has a spacer (13) with an end block (13b) in the direction of the slide rails (3).

8. Scratch tester according to claim 7, wherein the end block (13b) has a T-shaped cross-section.

9. Scratch tester according to one of claims 1 to 8, wherein the sliding block (2) contains a metal, preferably aluminum, titanium, iron, chromium, vanadium, cobalt, nickel, tungsten, and/or alloys thereof.

10. Scratch tester according to one of claims 1 to 9, wherein the spring (5) exerts a force of 1 N to 20 N.

11. Scratch tester according to one of claims 1 to 10, wherein, with a relaxed spring (5), the diamond (10) is positioned between or below the slide rails (3).

12. Method for the defined scratching of a glass surface with a scratch tester according to one of claims 1 to 11, wherein
a. the spring (5) is fixed in the adjustment window (6) via the adjustment device (7),
b. a force is exerted from above on the sliding block (2) in order to bring the sliding rails (3) to rest on a glass surface (14); and
c. the sliding block (2) is moved over the glass surface (14).

13. Method according to claim 12, wherein the sliding block (2) is moved over the glass surface (14) up to the stop of a spacer (13) attached on the sliding block (2).

14. Use of the scratch tester according to one of claims 1 to 11 for defined scratching of glass panes, preferably vehicle panes, particularly preferably windshields.

## Revendications

1. Testeur de rayures pour vitres comportant au moins
a. un cylindre de rayure (1) comportant un ressort (5) monté à l'intérieur du cylindre de rayure (1), le ressort (5) étant relié à un bloc de maintien (9) et à un diamant (10) fixé sur le bloc de maintien (9), ainsi qu'un dispositif de réglage (7) relié de manière détachable ou fixe au ressort (5) à l'intérieur d'une fenêtre de réglage (6) le long de la surface externe du cylindre de rayure (1) ;
b. un bloc de coulissement (2) comportant un alésage traversant (16) et deux glissières (3) se trouvant au-dessous du bloc de coulissement (2) pour l'appui sur une surface de verre (14) ;
c. le cylindre de rayure (1) étant fixé à l'intérieur de l'alésage traversant (16) et le bloc de maintien (9) présentant une encoche (19) et le cylindre de rayure (1), une vis de blocage (20), et l'encoche (19) entourant la vis de serrage (20) à l'intérieur du cylindre de rayure (1).

2. Testeur de rayures selon la revendication 1, dans lequel le cylindre de rayure (1) est fixé par une vis de blocage (4) à l'intérieur de l'alésage traversant (16).

3. Testeur de rayures selon l'une des revendications 1 et 2, dans lequel le bloc de maintien (9) est monté déplaçable à l'intérieur d'une bague de guidage (8) .

4. Testeur de rayures selon la revendication 3, dans lequel la bague de guidage (8) est fixée par la vis de blocage (4).

5. Testeur de rayures selon l'une des revendications 1 à 4, dans lequel le diamant (10) comporte un diamant Vickers.

6. Testeur de rayures selon l'une des revendications 1 à 5, dans lequel le diamant (10) présente la forme d'une pyramide équilatérale.

7. Testeur de rayures selon l'une des revendications 1 à 6, dans lequel le bloc de coulissement (2) présente un espaceur (13) ayant un bloc d'extrémité (13b) en direction des glissières (3).

8. Testeur de rayures selon la revendication 7, dans lequel le bloc d'extrémité (13b) a une forme en T en coupe.

9. Testeur de rayures selon l'une des revendications 1 à 8, dans lequel le bloc de coulissement (2) contient un métal, de préférence de l'aluminium, du titane, du fer, du chrome, du vanadium, du cobalt, du nickel, du tungstène et/ou des alliages de ceux-ci.

10. Testeur de rayures selon l'une des revendications 1 à 9, dans lequel le ressort (5) exerce une force de 1 N à 20 N.

11. Testeur de rayures selon l'une des revendications 1 à 10, dans lequel le diamant (10) est positionné entre ou au-dessous des glissières (3) dans l'état détendu du ressort (5).

12. Procédé pour la rayure définie d'une surface de verre par un testeur de rayures selon l'une des revendications 1 à 11, dans lequel
a. le ressort (5) est fixé dans la fenêtre de réglage (6) par le dispositif de réglage (7) ;
b. une force est exercée par le haut sur le bloc de coulissement (2), pour amener les glissières (3) en appui sur une surface de verre (14) ; et
c. le bloc de coulissement (2) est déplacé sur la surface de verre (14).

13. Procédé selon la revendication 12, dans lequel le bloc de coulissement (12) est déplacé sur la surface de verre (14) jusqu'à la butée d'un espaceur (13) fixé sur le bloc de coulissement (2).

14. Utilisation du testeur de rayures selon l'une des revendications 1 à 11 pour la rayure définie de vitres, de préférence de vitres de véhicules, de manière particulièrement préférée de pare-brise.
